Europäisches Patentamt

European Patent Office

Office européen des brevets

(19)

(11) Veröffentlichungsnummer: **0 261 545**
**A1**

(12) **EUROPÄISCHE PATENTANMELDUNG**

(21) Anmeldenummer: 87113415.1

(22) Anmeldetag: 14.09.87

(51) Int. Cl.⁴: **G11B 7/09** , G11B 11/10

(30) Priorität: **17.09.86 DE 3631625**

(43) Veröffentlichungstag der Anmeldung:
**30.03.88 Patentblatt 88/13**

(84) Benannte Vertragsstaaten:
**AT CH DE FR GB LI**

(71) Anmelder: **Siemens Aktiengesellschaft Berlin und München**
**Wittelsbacherplatz 2**
**D-8000 München 2(DE)**

(72) Erfinder: **Gottfried, Norbert, Dr. rer. nat.**
**Schumannstrasse 30**
**D-8011 Baldham(DE)**

(54) **Detektoranordnung zum Ermitteln des Fokussierfehlers bei einem optischen Datenspeicher.**

(57) Der Datenspeicher weist eine Speicherplatte (6) auf, auf der ein von einer Laserlichtquelle (1) durch einen Strahlteiler (4) hindurch ausgesandtes Lichtbündel mit Hilfe einer Abbildungsoptik (5) fokussiert wird. Ein von der Speicherplatte (6) reflektiertes Lichtbündel wird vom Strahlteiler (4) auf eine Detektoranordnung (11) ausgeblendet. Diese besteht aus parallelen streifenförmigen Detektorflächen (111, 112), deren Längsachsen (L) senkrecht zur Projektion (62) der Tangente einer Informationsspur (61) auf der Speicherplatte (6) im Strahlengang des reflektierten Lichtbündels angeordnet sind. Ein Fokusfehlersignal (FE) wird als das Differenzsignal aus der Summe der Ausgangssignale der Randstreifen (112) einerseits und des Mittelstreifens (111) gebildet. Dieses Differenzsignal wird bei korrektem Fokusabstand (d = f) der Abbildungsoptik (5) zu Null, wenn die Breite (b) dieses Mittelstreifens derart gewählt ist, daß der Mittelstreifen nur die halbe Strahlungsleistung empfängt.

## FIG 2

EP 0 261 545 A1

## Detektoranordnung zum Ermitteln des Fokussierfehlers bei einem optischen Datenspeicher

Die Erfindung bezieht sich auf eine Detektoranordnung zum Ermitteln des Fokussierfehlers bei einem optischen Datenspeicher gemäß dem Oberbegriff des Patentanspruches 1.

Allen Massenspeichern mit rotierendem Speichermedium, sei es magnetischen Plattenspeichern oder optischen Datenspeichern, ist gemeinsam, daß die Information in nebeneinanderliegenden, meist konzentrischen Informationsspuren aufgezeichnet ist und deshalb eine Abtasteinheit vorgesehen ist, die radial zur rotierenden Speicherplatte verschiebbar angeordnet ist. Diese Abtasteinheit wird vor Beginn von Schreib- bzw. Lesevorgängen über einer ausgewählten Informationsspur positioniert, während bei Schreib-bzw. Lesevorgängen die einmal eingestellte Spurposition gehalten wird. Dazu wird aus von der Abtasteinheit abgegebenen Lesesignalen ein Spurfehlersignal abgeleitet, das als Korrekturwert einem Positionsregelsystem zugeführt wird, um Spurablagen durch eine Feinkorrektur der radialen Position der Abtasteinheit zu korrigieren.

Im Gegensatz zu magnetischen Plattenspeichern benötigen optische Datenspeicher darüber hinaus ein zweites Regelsystem zur Korrektur des vertikalen Abstandes der Abtasteinheit von der Oberfläche der Datenspeicherplatte. Das beruht darauf, daß ein zumeist von einer Laserlichtquelle abgegebenes Lichtbündel in der ausgewählten Informationsspur auf der Oberfläche der Speicherplatte mit Hilfe einer Abbildungsoptik fokussiert wird, um von dort als reflektiertes Lichtbündel über die Abbildungsoptik und weitere optische Einheiten auf entsprechend angeordnete Fotodetektoren abgebildet zu werden. Durch geringfügige Vertikalbewegung der rotierenden Speicherplatte gerät das auftreffende Lichtbündel außer Fokus, so daß der vertikale Abstand der Ab bildungsoptik zur Oberfläche der Speicherplatte ständig korrigiert werden muß. Um dies zu erreichen, wird aus dem reflektierten Lichtbündel mit Hilfe einer entsprechenden Fotodetektoranordnung mit einer zusätzlichen elektronischen Schaltung ein Fokusfehlersignal abgeleitet, das als Korrekturwert einem Regelsystem für die vertikale Verschiebung der Abtasteinheit zugeführt wird.

Für optische Datenspeicher sind bereits eine Reihe von Lösungen zum Gewinnen eines solchen Fokusfehlersignales bekannt. Ein wesentlicher Gesichtspunkt ist dabei, daß die wegen der erforderlichen Lichtleistung nicht beliebig reduzierbare Masse der optischen Bauelemente auch die Folgegeschwindigkeit des vertikalen Positioniersystemes beeinflußt. Bei den bekannten Lösungen wird daher angestrebt, den Aufwand an optischen Bauelementen möglichst klein zu halten bzw. den optischen Strahlengang, zumindestens soweit es den vertikal bewegbaren Teil der Abtasteinheit betrifft, möglichst einfach zu gestalten und trotzdem über im Strahlengang des reflektierten Lichtbündels angeordnete Fotodetektoranordnungen Datensignale und Kontrollsignale, wie ein Fokusfehlersignal und ein Spurfehlersignal zuverlässig zu gewinnen.

Wenn auch die bekannten Lösungen von diesen Überlegungen ausgehen, so kann man doch typisierend zwei Lösungsgruppen unterscheiden. Charakteristisch für die eine Gruppe ist eine einzige, multifunktionale Fotodetektoranordnung, bestehend aus mehreren Teilflächen mit einer spezifischen Geometrie und Lage zueinander. Die Form und die geometrische Zuordnung der einzelnen Teilflächen ist dabei so gewählt, daß aufgrund unterschiedlicher Kombinationen der Ausgangssignale der einzelnen Teilflächen sowohl Datensignale, als auch Steuersignale wie z. B. das Fokusfehlerfehler und das Spurfehlersignal zu generieren sein sollen. Da nur eine einzige Detektoranordnung eingesetzt wird, ist es selbstverständlich nicht notwendig, das reflektierte Lichtbündel mehrfach aufzuteilen, so daß sich die Anzahl der optischen Bauelemente im Strahlengang reduzieren läßt.

Ein Beispiel für eine derartige multifunktionale Detektoranordnung ist aus JP-A-58 50 630, sowie dem zugehörigen veröffentlichten Kurzauszug Patent Abstracts of Japan, Band 7, Nr. 134 (P-203) [1279] vom 11. Juni 1983 bekannt. Die bekannte Detektoranordnung besteht aus drei zueinander parallel angeordneten und streifenförmig ausgebildeten Detektorflächen, die im reflektierten Lichtbündel derart angeordnet sind, daß ihre Längsachsen senkrecht zur Projektion der Tangente einer Informationsspur liegen. Die Ausgangssignale der einzelnen Detektorflächen werden in unterschiedlicher Weise miteinander verknüpft, um ein Rohdatensignal bzw. Kontrollsignale zu gewinnen. Das Rohdatensignal wird aus der Summe aller drei Ausgangssignale gewonnen. Die Differenz zwischen den Ausgangssignalen eines der Randstreifen und des Mittelstreifens bildet das Fokusfehlersignal. Zum Gewinnen des Spurfehlersignales werden die Randstreifen längs der Projektion der Spurtangente geteilt. Die Differenz der Ausgangssignale der Teilflächen zu beiden Seiten der Spurtangente ergibt dann das Spurfehlersignal.

Ein weiteres Beispiel für eine multifunktionale Detektoranordnung ist in der DE-A-34 05 433 beschrieben. Wenn man nun nach dem optischen Aufbau des Strahlenganges ein einziges abtastendes und daraus resultierend wiederum ein einziges reflektiertes Lichtbündel anstrebt, dann schränkt man sich automatisch zumindestens auch hinsichtlich der zu realisierenden Funktionen ein. Offensichtlich sind z. B. mit einem einzigen abtastenden Lichtbündel bzw. Lichtfleck Zusatzfunktionen, wie ein Kontrollesen unmittelbar vorher eingeschriebener Information, häufig als DRAW ( = Direct Read After Write)-Funktion bezeichnet, nicht möglich.

Daneben können die durch eine multifunktionale Detektoranordnung gewonnenen Signale nicht wirklich völlig unabhängig voneinander sein. Unter kritischen Betriebsbedingungen kann daher eine Art "Übersprecheffekt" eintreten. Eine solche kritische Betriebsbedingung ist z. B. das Aufsuchen einer entfernten Spur, ein Vorgang, bei dem in schnellem Durchlauf eine Vielzahl von Informationsspuren gekreuzt wird. Häufig ist es erwünscht, aus der Anzahl der pro Zeiteinheit gekreuzten Informationsspuren ein Geschwindigkeitspositionssignal zum Steuern dieses Suchvorganges abzuleiten. In diesem Fall muß dann die optische Abtasteinheit auch während dieses Vorganges im Fokus gehalten werden, damit jede Spurkreuzung eindeutig zu diskriminieren ist. Bei vielen multifunktionalen Detektoranordnungen gerät die Abtasteinheit beim Überlaufen einer Spurkante scheinbar außer Fokus, was sich auf das Fokusfehlersignal derart auswirken kann, daß das vertikale Positioniersystem zum Schwingen neigt und nicht mehr ausreichend stabil nachregelt. Dies wiederum kann die eindeutige Erkennung einer Spurkante erschweren.

Ein Beispiel für die zweite Gruppe von bekannten Detektoranordnungen mit mehrfach aufgeteilten Strahlengängen des reflektierten Lichtbündels ist in JP-A-60 217 535 bzw. im zugehörigen Kurzauszug Patent Abstracts of Japan, Band 10, Nr. 80 (P-441) [2137] vom 29. März 1986 beschrieben. Bei dieser bekannten Anordnung teilt ein Strahlteiler das reflektierte Lichtbündel in zwei Teilbündel auf, die jeweils auf eine Detektoranordnung gerichtet werden. Im einen Fall ist die Detektoranordnung vor, im anderen Fall hinter dem Brennpunkt im jeweiligen Strahlengang angeordnet. Die Detektoranordnungen selbst sind hier wieder aus parallelen, streifenförmigen Detektorflächen zusammengesetzt. Es werden jeweils Summensignale aus den Ausgangssignalen der Randstreifen der einen Detektoranordnung und des Mittelstreifens der anderen Detektoranordnung gebildet. Um den Fokusfehler zu ermitteln, vergleicht man die beiden so gebildeten Summensignale. Damit soll sich die Linearität dieses Fehlersignales nahe dem Fokuspunkt verbessern. Dies aber wird mit einem verhältnismäßig großen Aufwand erkauft.

Ein weiteres Beispiel für die zweite Gruppe der bekannten Lösungen ist in der internationalen Patentanmeldung PCT/US 84/01591 beschrieben. Diese bekannte Detektoranordnung für einen optischen Datenspeicher weist eine Mehrzahl von einzelnen Fotodetektoren, sowie zwei sogenannte 4-Quadranten-Detektoren auf. Jedem dieser Detektorelemente ist eine bestimmte Funktion zugeordnet, so daß Daten-bzw. Kontrollsignale zu generieren sind, die weit unabhängiger voneinander sein können, als bei einer der oben angesprochenen multifunktionalen Fotodetektoranordnung. Allerdings erfordert die Funktion der bekannten Mehrfach-Detektoranordnung auch eine entsprechende Vervielfachung der abtastenden bzw. reflektierten Lichtbündel. Bei der bekannten Mehrfachdetektoranordnung sind zur Aufteilung des abtastenden Lichtbündels Beugungsgitter im Strahlengang vorgesehen, die eine entsprechende Aufteilung eines abtastenden Lichtbündels in Teillichtbündel ermöglichen, was nur mit erhöhtem Bauteileaufwand sowie höheren Kosten für teuere optische Elemente realisiert werden kann.

Das letztgenannte Dokument ist auch ein Beispiel dafür, daß zum Gewinnen des Fokusfehlersignales häufig 4-Quadranten-Detektoren eingesetzt werden. Auf diesem wird ein fokussiertes Lichtbündel als Kreisfläche, außer Fokus stehende Lichtbündel als Ellipsen abgebildet, wobei die Winkellage der Zentralachse einer Ellipse die Richtungsinformation über die Fokusablage widerspiegelt. So läßt sich ein analoges Spurfehlersignal ableiten, das nach Betrag und Vorzeichen die Größe und Richtung der Fokusablage eindeutig repräsentiert. Man faßt dazu die elektrischen Ausgangssignale jeweils der diametral einander gegenüberstehenden Quadrantenflächen additiv zusammen und bildet aus den Summensignalen ein Differenzsignal. Dieses Differenzsignal ist das Fokusfehlersignal, das bei fokussiertem Abtastlichtbündel 0 ist bzw. bei einer Fokusablage einen positiven oder negativen Wert annimmt.

Die vorstehenden Betrachtungen über die Gewinnung des Fokusfehlersignales gelten allerdings ideal nur solange keine Spurablage vorliegt. Trifft der Abtastlichtstrahl auf den Spurrand, dann wird das reflektierte Lichtbündel gebeugt und die Projektion des Abtastlichtpunktes wandert seitlich aus dem Zentrum des 4-Quadranten-Detektors aus. Eine Verzerrung des Fokusfehlersignales ist die Folge. Beim Positionieren der Abtasteinheit auf eine entfernte Spur wird also das Fokusfehlersignal aufgrund der auftretenden Spurkreuzungen moduliert, so daß dem vertikalen Positioniersystem während des Suchvorgangs verzerrte Werte angeboten werden.

Der vorliegenden Erfindung liegt daher die Aufgabe zugrunde, bei einer Detektoranordnung zum Ermitteln des Fokussierfehlers der eingangs genannten Art die Geometrie der Teilflächen weiterzubilden, so daß das Fokusfehlersignal von Störungen weitgehend unabhängig ist und damit eine eindeutige Fokussierung des abtastenden Lichtbündels auf der Speicherplatte auch während eines Suchvorganges ermöglicht wird.

Bei einer Detektoranordnung der eingangs genannten Art wird diese Aufgabe erfindungsgemäß gelöst durch die Merkmale, die im Kennzeichen des Patentanspruches 1 beschrieben sind.

Diese Lösung geht von der Überlegung aus, daß das aus der Abbildungsoptik austretende reflektierte Lichtbündel nur im fokussierten Zustand ein paralleles Lichtbündel ist, während es bei einer Fokusablage je nach deren Richtung divergiert bzw. konvergiert. Die Abbildung des auf einer Spur der Speicherplatte fokussierten Abtastlichtbündels in einer Bildebene, nämlich dem Ort des Detektors zum Ableiten des Fokusfehlersignales ist also eine Kreisfläche vorgegebener Größe, die im defokussierten Zustand vergrößert bzw. verkleinert ist.

Wenn man nun die Detektoranordnung streifenförmig ausbildet und diese Streifen mit ihrer Längsachse senkrecht zur Projektion der Tangente einer Informationsspur auf der Speicherplatte anordnet, dann wandert der Bildpunkt des reflektierten Lichtbündels bei radialen Spurablagen des Abtastlichtstrahles nur in einer der beiden Richtungen längs der Achse der streifenförmigen Detektorteilflächen aus, ohne daß sich die Lage der Abbildung in der dazu senkrechten Richtung verändert. Eine derartige Detektorgeometrie ist also gegenüber solchen Verschiebungen des Lichtbündels unempfindlich.

Gemäß der Erfindung ist die Breite des Mittelstreifens der Detektoranordnung im Hinblick auf die geometrische Abbildung des Abtastlichtpunktes derart gewählt, daß bei einem fokussierten Lichtstrahl die Summe der Ausgangssignale der beiden Randstreifen gerade dem Ausgangssignal des Mittelstreifens der Detektoranordnung entspricht. Im fokussierten Zustand ist also das Spurfehlersignal wiederum Null, wenn es als Differenzsignal aus der Summe der Ausgangssignale der Randstreifen und dem Ausgangssignal des Mittelstreifens gebildet wird.

Gemäß einer Weiterbildung der Erfindung lassen sich Verschiebungen der Abbildung in Achsenrichtung sogar noch eliminieren, indem man in dem Strahlengang des reflektierten Lichtbündels vor der Detektoranordnung eine Zylinderlinse derart anordnet, daß alle reflektierten Lichtbündel unabhängig von der Spurablage des Abtastlichtpunktes auf der Speicherplatte in dieselbe, etwa strichförmige Abbildung auf der Detektoranordnung abgebildet werden. In diesem Fall läßt sich so die Dimension der Detektoranordnung in Richtung der Längsachse der Streifen wesentlich reduzieren. Diese Ausführungsform eignet sich daher insbesondere auch für integrierte Ausführungen von Fotodetektoranordnungen.

Andere Weiterbildungen der Erfindung und deren Vorteile ergeben sich aus der nachfolgenden Beschreibung von Ausführungsbeispielen. Dabei zeigt:

FIG 1 schematisch ein optisches Abtastsystem für einen magneto-optischen Speicher in Form eines Blockschaltbildes unter besonderer Berücksichtigung des Strahlenganges eines reflektierten Lichtbündels zum Erzeugen eines Fokusfehlersignales mit Hilfe einer Detektoranordnung,

FIG 2 schematisch eine Grundform für diese Detektoranordnung mit drei übereinanderliegenden streifenförmigen Teilflächen,

FIG 3 und FIG 4 schematisch jeweils die Veränderung des reflek tierten Lichtbündels, sobald die Speicherplatte in bezug auf die Abbildungsoptik außer Fokus liegt,

FIG 5 eine Weiterbildung der Grundform der Detektoranordnung, bei der der Mittelstreifen die außenliegenden Randstreifen seitlich derart umfaßt, daß die Summe der Fläche der Randstreifen etwa der Fläche des Mittelstreifens entspricht und die außerdem eine vierte konzentrisch um diese drei Teilflächen angeordnete vierte Teilfläche in Form eines Kreisringes aufweist und

FIG 6 in Form eines Zustandsdiagrammes die Veränderung des Fokusfehlersignales in Abhängigkeit von dem Abstand zwischen Abbildungsoptik und Speicherplatte.

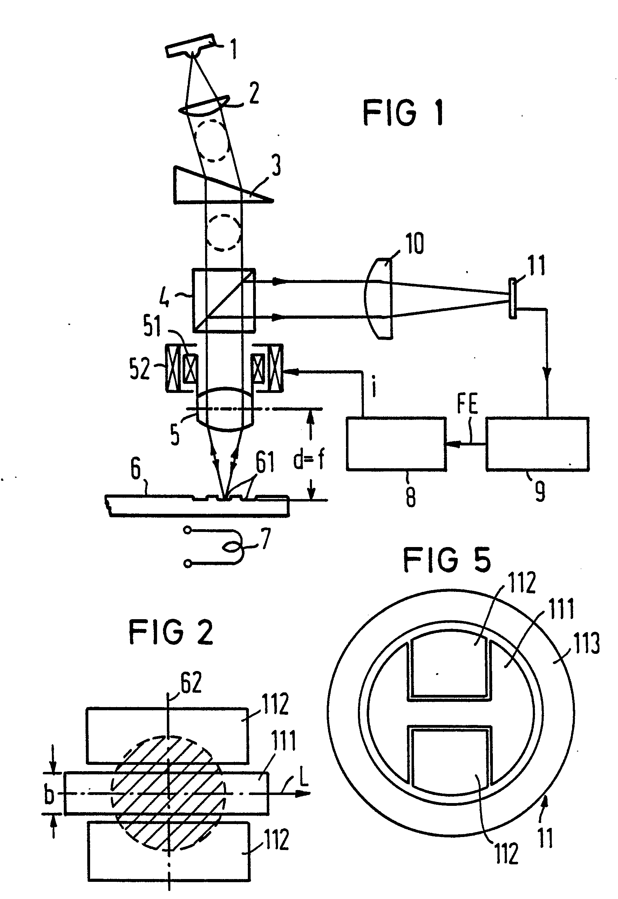

Das in FIG 1 dargestellte Blockschaltbild eines Abtastsystemes für einen magneto-optischen Speicher zeigt eine Laserdiode 1 als Lichtquelle, die einen linear polarisierten Laserstrahl ausstrahlt. Der divergierende Laserstrahl wird von einer Sammellinse 2 gebündelt. Dieses Lichtbündel ist, wie im Strahlengang mit unterbrochenen Linien angedeutet, wegen der Eigenschaft der Laserdiode noch elliptisch verformt. Es ist ein Prisma 3 vorgesehen, das das Abtastlichtbündel bei einer Verzerrung in der Zeichenebene in ein Lichtbündel mit kreisförmigem Querschnitt umformt. Dieses Lichtbündel wird einem polarisierenden Strahlteiler 4 zugeführt, der bezüglich der Strahlrichtung des einfallenden linear polarisierten Lichtbündels durchlässig ist. Das durch den Strahlteiler 4 hindurchgetretene Lichtbündel wird mit Hilfe einer Abbildungsoptik 5 auf der Oberfläche einer Speicherplatte 6 in einem Abtastpunkt fokussiert.

Die Speicherplatte 6 wird von einer nicht dargestellten Antriebseinrichtung angetrieben und läuft in einer zur Zeichenebene senkrechten Ebene um. Sie besitzt eine Vielzahl von konzentrischen Aufzeichnungsspuren 61, von denen einige schematisch und nicht maßstabsgetreu angedeutet sind. Eine Charakte ristik des magneto-optischen Speichers ist, daß als Speichermedium Materialien verwendet werden, deren magnetische Eigenschaften temperaturabhängig sind. Da im vorliegenden Fall weder das Speichermedium an sich noch die Art des Schreibverfahrens von Bedeutung sind, genügt es anzudeuten, daß beim Einschreiben ein Laserstrahl mit ausreichender Intensität auf der Oberfläche der Speicherplatte 6 fokussiert wird. Einwirkungszeit und Intensität des Laserstrahles reichen aus, um das Speichermedium lokal soweit zu erwärmen, daß es in einem Brennfleck von der Größe einer ausreichend stabilen Speicherdomäne paramagnetisch wird. Beim Abkühlen genügt dann ein relativ kleines, von einer schematisch angedeuteten Spule 7 abgegebenes Magnetfeld, um lokal eine Magnetisierungsrichtung in dieser Speicherdomäne festzulegen. Voraussetzungsgemäß ist die Koerzitivfeldstärke des Speichermaterials bei Raumtemperatur wesentlich höher als die zum Einschreiben nötige Feldstärke, so daß nicht erwärmte Bereiche der Speicherplatte 6 nicht ummagnetisiert werden können.

Selbstverständlich muß der Laserstrahl für Schreib-und Lesevorgänge bezüglich der einzelnen Spuren 61 der Speicherplatte radial positionierbar sein. Derartige Positioniereinrichtungen und die zugehörigen Positionierregelsysteme sind auch für optische Datenspeicher an sich bekannt, im vorliegenden Zusammenhang aber ohne Bedeutung. Aus diesem Grund sind sie in FIG 1 auch nicht dargestellt und auf eine nähere Beschreibung wird verzichtet.

Weiterhin ist es aber bei allen optischen Speichern auch von wesentlicher Bedeutung, daß das die Speicherplatte 6 abtastende Lichtbündel im Fokus gehalten wird, d. h., der aktuelle Abstand d zwischen der Abbildungsoptik 5 und der Oberfläche der Speicherplatte 6 mit der Brennweite f der Abbildungsoptik 5 übereinstimmt. Wegen der geringen Intensität des reflektierten Lichtes und der daraus gewonnenen Signale ist diese Bedingung bei optischen Datenspeichern von wesentlicher Bedeutung, daher muß z. B. der im Betrieb auftretende Vertikalschlag der Speicherplatte 6 kontinuierlich ausgeregelt werden. Obwohl ein da für bei optischen Datenspeichern angesetztes vertikales Positioniersystem als solches im vorliegenden Fall nur von untergeordneter Bedeutung ist, ist dies in FIG 1 schematisch durch eine Tauchspulenanordnung und entsprechende Elektronik angedeutet. Um eine mit der Abbildungsoptik 5 fest verbundene Tauchspule 51 ist dazu konzentrisch ein Ringmagnet 52 gestellfest angeordnet. Dieser Ringmagnet 52 erhält als Stellgröße einen bestimmten Strom i, um den Abstand d der Abbildungsoptik von der Speicherplatte 6 der Brennweite f der Abbildungsoptik 5 anzugleichen. Diese Stellgröße wird von einem Vertikalregelsystem 8 abgegeben, das seinerseits von einer Auswerteelektronik 9 ein Fokusfehlersignal FE als Regelgröße empfängt. Wie diese Auswerteelektronik angesteuert wird, wird nachfolgend im einzelnen erläutert.

Beim Lesen eines magneto-optischen Speichers wird der Kerr-bzw. der Faradayeffekt ausgenutzt, nach denen linear polarisiertes Licht bei Reflexion an bzw. Durchgang durch eine Schicht mit magnetischer Vorzugsrichtung entsprechend dieser Richtung eine positive bzw. negative Drehung seiner Polarisationsebene erfolgt. Für den vorliegenden Fall bedeutet dies, daß die Laserdiode im Dauerbetrieb bei geringer Leistung gehalten und das von ihr abgegebene abtastende Lichtbündel durch die Abbildungsoptik 5 auf die Oberfläche der Speicherplatte 6 fokussiert wird. Das reflektierte und in seiner Polarisationsebene der lokalen Magnetisierung entsprechend gedrehte reflektierte Lichtbündel tritt durch die Abbildungsoptik 5 hindurch in den Strahlteiler 4 ein. Die Strahlrichtung ist nun zu dem ausgesandten Laserlichtstrahl entgegengesetzt, d. h. das reflektierte Lichtbündel wird im Strahlteiler 4 seitlich ausgelenkt. Das ausgeblendete, reflektierte Lichtbündel tritt durch ein hier als Zylinderlinse 10 angedeutetes Abbildungssystem und wird von einer Detektoranordnung 11 aufgefangen.

Bei optischen Speichern besitzt eine derartige Detektoranordnung eine besondere Geometrie mit einzelnen, voneinander elektrisch getrennten Detektorflächen, deren Ausgangssignale, in geeigneter Weise miteinander kombiniert, im vorliegenden Fall das Fokusfehlersignal FE abzuleiten gestatten.

Die hier gewählte Geometrie für die Detektoranordnung 11 ist in FIG 2 schematisch dargestellt. Der Fotodetektor besteht aus drei streifenförmigen Detektorflächen, einem Mittelstreifen 111 und zwei Randstreifen 112 zu beiden Seiten des Mittelstreifens. Mit einer unterbrochenen Kreislinie ist schematisch für den fokussierten Zustand der Abbildungsoptik 5 die Abbildung des Abtastfleckes auf der Speicherplatte 6 wiedergegeben. Durch eine strichpunktierte Linie ist in der FIG 2 auch die Lage der Tangente 62 einer der Abtastspuren 61 angedeutet. In FIG 1 steht die Spurtangente senkrecht zur Zeichenebene, ihre Projektion auf die Detektoranordnung 11 steht senkrecht zur Längsachse L der Detektorflächen 111 bzw. 112.

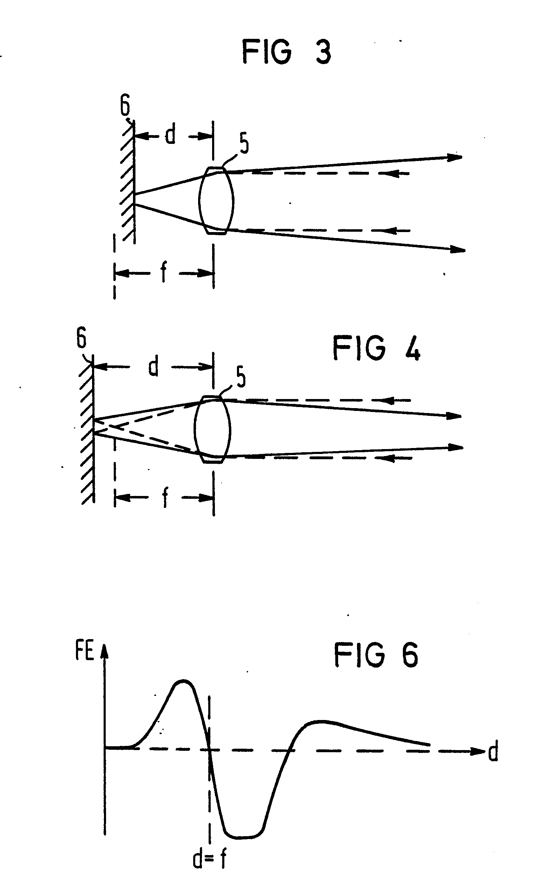

Die Geometrie und die Anordnung der Detektoranordnung 11 bezüglich des Strahlenganges des reflektierten Lichtbündels beruht auf folgender Überlegung, die anhand der FIG 3 bzw. 4 illustriert ist. Während in FIG 1 angedeutet ist, daß die Abbildungsoptik 5 im Fokusabstand, d. h. d = f der Speicherplatte 6 gegenübersteht, sind in FIG 3 bzw. 4 davon abweichende Zustände angenommen. Im fokussierten Zustand von FIG 1 wird das reflektierte Lichtbündel von der Abbildungsoptik 5 in ein paralleles Lichtbündel umgewandelt. Ist jedoch der Abstand d der Abbildungsoptik 5 von der Speicherplatte 6, wie in FIG 3 dargestellt, kleiner als die Brennweite f der Abbildungsoptik 5, dann formt die Abbildungsoptik 5 das reflektierte Lichtbündel in ein divergentes Lichtbündel um.. Umgekehrt ist der Sachverhalt, wenn die Speicherplatte 6 von der Abbildungsoptik 5 weiter entfernt ist, als der Brennweite f der Abbildungsoptik 5 entspricht, wie in Fig. 4 dargestellt ist. Diese Gesetzmäßigkeit kann man sich nun zunutze machen, um daraus das Fokusfehlersignal FE abzuleiten. Denn der Durchmesser der vom reflektierten Lichtbündel erzeugten Abbildung auf der Detektoranordnung 11 ist ein Maß für den aktuellen Abstand d der Abbildungsoptik 5 von der Speicherplatte 6.

Nun möchte man, zurückkehrend zur FIG 2, das Fokusfehlersignal FE dann zu Null machen, wenn die Abbildungsoptik 5 gerade im Fokusabstand (d = f) der Speicherplatte 6 gegenübersteht. Wenn man aus der Summe der Ausgangssignale der beiden Randstreifen 112 und dem Ausgangssignal des Mittelstreifens 111 ein Differenzsignal bildet, dann ist dieses Differenzsignal ein Maß für den Abstand d der Abbildungsoptik 5 zur Speicherplatte 6. Unter Berücksichtigung des Strahlenganges des reflektierten Lichtbündels, d. h. der diesen Strahlengang beeinflussenden optischen Elemente kann man in dem jeweiligen Anwendungsfall durch eine geeignete Dimensionierung der Breite b des Mittelstreifens 111 erreichen, daß die Fotoströme der einzelnen Detektorflächen bei korrekter Fokussierung der Abbildungsoptik 5 gerade Werte annehmen, bei denen das Differenzsignal zu Null wird.

Eine Abschätzung der Breite b des Mittelstreifens 111 läßt sich auf folgender Grundlage durchführen. Wird für das reflektierte Lichtbündel ein Gaußprofil angenommen, dann gilt für die Lichtintensität I auf der Oberfläche der Detektoranordnung 11 in rechtwinkligen Koordinaten die folgende Beziehung:

$$(1) \quad I(x, y) = \frac{1}{\pi r o^2} \exp\left(\frac{-x^2 - y^2}{r o^2}\right)$$

Dabei ist x die Koordinate in Richtung der Längsachse L und ro der Radius, bei dem die Intensität des Lichtbündels das $e^{-1}$-fache des Maximalwerts im Zentrum darstellt. Die Breite b des Mittelstreifens 111 ist dann bestimmt durch die Beziehung:

$$(2) \quad \int_{-\infty}^{+\infty} dx \int_{-b/2}^{+b/2} dy \, (r o^2 \cdot \pi)^{-1} \exp\left(-\frac{x^2 + y^2}{r o^2}\right) = 0,5$$

Daraus ergibt sich für die Breite des Mittelstreifens 111 b ≈ 0,96 ro.

Aufgrund dieser Geometrie hat die Detektoranordnung 11 eine wesentliche Eigenschaft, sie ist nämlich unempfindlich auf Ver schiebungen des reflektierten Lichtbündels entlang der Längsachse L. Dies ist darauf zurückzuführen, daß diese Längsachse L voraussetzungsgemäß senkrecht zur Spurtangente 62 steht, so daß ein durch die Beugung des reflektierten Lichtbündels an den Spurkanten bedingter Versatz der Abbildung auf der Detektoranordnung 11 lediglich eine Verschiebung längs dieser Längsachse L bewirken kann. Bei ausreichender Streifenlänge der Detektorflächen sind deren Ausgangssignale von einer derartigen Längsverschiebung unabhängig. Hierdurch wird erreicht, daß das Vertikalregelsystem 8 unabhängig von auftretenden Spurhaltefehlern arbeiten kann. Dies ist insbesondere dann von Bedeutung, wenn die exakte Fokussierung der Abbildungsoptik 5 auch während des Positioniervorganges auf eine entfernte Spur eingehalten werden soll, so daß aus der zeitlichen Aufeinanderfolge von Spurkreuzungen ein momentanes Geschwindigkeitssignal abgeleitet werden kann, das diesen Vorgang der Radialpositionierung steuert.

Mit der Ableitung der Breite b des Mittelstreifens 111 aufgrund vorstehender Beziehungen (1), (2) ist die Möglichkeit angedeutet, mit Hilfe eines Linsensystems vor der Detektoranordnung 11 dessen Abmessungen an die des reflektierten Lichtbündels anzupassen. Eine spezielle Möglichkeit dazu besteht in einer Modifikation, die bereits in FIG 1 schematisch dargestellt ist. Man kann nämlich in das Abbildungssystem des reflektierten Lichtbündels eine Zylinderlinse 10 einbeziehen. Wenn diese Zylinderlinse 10 in dem Strahlengang des reflektierten Lichtbündels derart angeordnet ist, daß sie das Lichtbündel auf den Detektorflächen, d. h. dem Mittelstreifen 111 und den Randstreifen 112 im wesentlichen in einen zu deren Längsachse L senkrechten Strich abbildet, dann ist die Abbildung des Abtastpunktes in jedem Fall auch bei Spurhaltefehlern ortsfest, d. h. eine Verschiebung des reflektierten Lichtbündels wirkt sich auf die Detektoranordnung 11 nicht mehr aus. Schließlich sei auf einen weiteren Vorteil der beschriebenen Detektoranordnung hingewiesen. Mit der Gesamtsumme der Ausgangssignale der Detektorflächen, dem Mittelstreifen 111 und den beiden Randstreifen 112, steht die volle Information über die Intensität des reflektier ten Lichtbündels zur Verfügung. Das bedeutet, daß daraus auch ein Rohdatensignal ableitbar ist. Bei entsprechender, an sich bekannter Ausbildung der Auswerteelektronik 9 läßt sich dies in einfacher Weise realisieren.  .

In FIG 5 ist eine weitere Ausführungsform der beschriebenen Detektoranordnung 11 dargestellt. Diese Anordnung ist im wesentlichen kreisförmig gestaltet, d. h. die Randstreifen 112 sind zusammen mit dem Mittelstreifen 111 in eine Kreisfläche gesetzt. An den Mittelstreifen 111 sind seitlich Kreissegmente angesetzt. Der Sinn dieser Maßnahme besteht in einer flächenmäßigen Anpassung der Gesamtfläche des Mittelstreifens 111 an die Summe der Flächen der Randstreifen 112. Dies berücksichtigt die elektrische Eigenschaft von Fotodetektorflächen, die eine ihrer Fläche proportionale Kapazität aufweisen. Durch die Anpassung der Fläche des Mittelstreifens 111 an die Gesamtfläche der beiden Randstreifen 112 ist für die beiden Signaleingänge der Auswerteelektronik 9 im wesentlichen die gleiche Eingangskapazität realisiert, so daß sich weitere Maßnahmen zur Signalanpassung erübrigen.

Die in FIG 5 dargestellte Fotodetektoranordnung enthält darüber hinaus einen weiteren, kreisringförmigen Außenbereich 113, der als vierte Detektorteilfläche aufzufassen ist. Wie noch nachstehend erläutert wird, könnte gegebenenfalls ein Zustand völliger Defokussierung eintreten, in diesem Zustand würde sich bei entsprechender Bemessung der Durchmesser dieser kreisförmigen Detektoranordnung 11 eine Abbildung ergeben, die auch noch die Ringfläche 113 erfaßt. Ein über einer vorgegebenen Schwelle liegendes Ausgangssignal dieser Ringfläche 113 könnte daher gegebenenfalls als zusätzliches Fehlersignal das Vertikalregelsystem 8 so steuern, daß ungeachtet des momentanen Fokussierungszustandes eine definierte Anfangslage im Abstand d der Abbildungsoptik 5 gegenber der Speicherplatte 6 hergestellt wird.

Der Sinn dieser Maßnahme wird im Zusammenhang mit dem in FIG 6 dargestellten Signaldiagramm deutlicher. In diesem Signaldia gramm ist das von der Auswerteelektronik 9 generierte Fokusfehlersignal FE über dem Abstand d der Abbildungsoptik 5 von der Speicherplatte 6 aufgetragen. Wie man sich aufgrund von FIG 3 ohne weiteres vorstellen kann, ist die Divergenz des reflektierten Lichtbündels bei sehr kleinen Abständen d sehr hoch. Aufgrund der beschriebenen Geometrie der Detektoranordnung 11 bedeutet dies, daß die Intensität des auf die Detektoranordnung. gelangenden Lichtes zunächst nicht ausreicht, um ein Ausgangssignal zu erzeugen. Der in FIG 6 dargestellte Signalverlauf beginnt daher im Nullpunkt. Das Signal steigt dann sehr rasch zu einem ersten positiven Extremwert an, bei dem die Ausgangsströme der Randstreifen 112 sehr groß gegenüber dem Ausgangsstrom des Mittelstreifens 111 sind.

Mit fallendem Durchmesser der Abbildung des Abtastpunktes auf der Detektoranordnung 11 gleichen sich die genannten Ausgangsströme immer mehr aneinander an und sind im Fokusabstand d = f identisch, so daß das als Differenzsignal gebildete Fokusfehlersignal FE hier durch 0 geht. Es erreicht sehr schnell einen flachen negativen Extremwert, da dann das Differenzsignal im wesentlichen durch das Ausgangssignal des Mittelstreifens 111 bestimmt ist.

Bei weiter wachsendem Abstand d steigt allerdings das Ausgangssignal wiederum an, durchläuft den Nullpunkt und erreicht einen zweiten positiven Extremwert, von wo aus es dann wieder asymptotisch abfällt. Dieser Kurvenast ist dadurch bedingt, daß bei einer vorgegebenen Geometrie der Abbildung des reflektierten Lichtbündels ein Punkt erreicht wird, in dem die Schnittweite des konvergierenden Lichtbündels, wie man sich aufgrund von FIG 4 vorstellen kann, kleiner ist als der Abstand zur Detektoranordnung 11. D. h., das reflektierte Lichtbündel bildet bei wachsender Konvergenz einen Schnittpunkt, der sich immer weiter von der Oberfläche der Detektoranordnung 11 entfernt, so daß die Abbildung auf der Detektoranordnung hier mit wachsendem Abstand d wiederum ein Kreis mit wachsendem Durchmesser ist.

Diese Signalcharakteristik des Fokusfehlersignales ist durch die Gesetze der geometrischen Abbildung vorgegeben und daher auch schon bei anderen Vertikalregelsystemen mit konventionellen Detektoranordnungen zu finden. Die in diesem Signalverlauf enthaltene Mehrdeutigkeit ist zwar systematisch unbefriedigend, jedoch für die Praxis weniger wesentlich. Ein Zahlenbeispiel mag dies erläutern: Der Abstand der beiden etwa symmetrisch zum Fokusabstand d = f angeordneten Extremwerte entspricht einer Abstandsänderung Δd von etwa 100 bis 300 μm. Im Vergleich dazu ist der im stationären Betrieb des Vertikalregelsystemes auszusteuernde Bereich etwa um 2 Größenordnungen niedriger.

Es genügt daher, das Regelsystem so auszugestalten, daß es zwischen dem ersten Maximum und dem Minimum zu beiden Seiten des Fokusabstandes d = f stabil arbeitet, wenn man die Voraussetzungen dafür schafft, daß das Regelsystem ungeachtet einer völlig defokussierten Ausgangslage immer in diesem Bereich gesteuert wird. Es bietet sich an, das Vertikalregelsystem 8 als proportional-differenzierend wirkenden Regler (PD-Regler) auszubilden. Ein solcher Regler wirkt im stationären Zustand für das Regelsignal wie ein Proportionalverstärker, bei Spannungsänderungen am Eingang gibt jedoch der Ausgang eine zusätzliche Spannung entsprechend der zeitlichen Änderung des Regelsignals ab. Er differenziert also die Eingangsspannung.

Wenn man zusätzlich dafür sorgt, daß bei jeder Inbetriebnahme bzw. bei völliger Außer-Fokus-Lage die Abbildungsoptik 5 durch entsprechende Erregung des Ringmagneten 52 zunächst in eine Position gesteuert wird, die dem Zustand d < f entspricht, dann ist die Mehrdeutigkeit der Signalcharakteristik des Fokusfehlersignales FE eliminiert. Aufgrund der genannten Regelcharakteristik des Vertikalregelsystems 8 wird das erste Maximum schnell durchlaufen und das Regelverhalten im abfallenden Kurvenast stabilisiert. Um dieses Einschaltverhalten zu erreichen, kann man sich der anhand von FIG 5 beschriebenen Detektoranordnung 11 bedienen, die außenliegende Ringfläche 113 der Detektoranordnung liefert immer dann und nur dann ein Ausgangssi gnal, wenn die Abbildungsoptik 5 völlig außer Fokus ist. Mit Hilfe dieses Ausgangssignales läßt sich das Vertikalregelsystem 8 derart einstellen, daß es zunächst als Stellgröße ein Ausgangssignal abgibt, das die Abbildungsoptik 5 in eine Ausgangsposition d < f steuert.


**Ansprüche**

1. Detektoranordnung zum Ermitteln des Fokussierfehlers bei einem optischen Datenspeicher mit einer Speicherplatte, auf der ein von einer Laserlichtquelle erzeugtes Lichtbündel mit Hilfe einer Abbildungsoptik fokussiert wird bzw. ein reflektiertes Lichtbündel auf eine einzige, multifunktionale, im Brennpunktsabstand zu einer Abbildungslinse stehende Detektoranordnung abgebildet wird, die aus parallelen, streifenförmigen Detektorflächen besteht, deren Längsachsen im Strahlengang des reflektierten Lichtbündels senkrecht zur Projektion der Tangente einer Informationsspur auf der Speicherplatte angeordnet sind, wobei das Fokusfehlersignal als Differenzsignal aus Ausgangssignalen der Randstreifen einerseits und des Mittelstreifens andererseits gebildet wird, **dadurch gekennzeichnet**, daß die Breite (b) des Mittelstreifens (111) der Detektoranordnung nicht größer als derjenige Durchmesser (ro) des auf die Detektoranordnung (11) fallenden Lichtbündels gewählt ist, bei dem die Intensität des Lichtes nur mehr das $e^{-1}$-fache des Maximalwertes im Zentrum beträgt und daß das Fokusfehlersignal (FE) aus den summierten Ausgangssignalen beider Randstreifen (112) einerseits und dem Ausgangssignal des Mittelstreifens gebildet wird.

2. Detektoranordnung nach Anspruch 1, **dadurch gekennzeichnet**, daß die Breite (b) des Mittelstreifens (111) etwa das 0,96-fache desjenigen Durchmessers (ro) des reflektierten Lichtbündels auf der Detektoranordnung (11) ist, bei dem die Intensität des Lichtes den $e^{-1}$-fachen Teil des Maximalwertes im Zentrum beträgt.

3. Detektoranordnung nach einem der Ansprüche 1 oder 2, **gekennzeichnet durch** eine kreisförmige Ausgestaltung, bei der an beide Enden des Mittelstreifens (111) je eine Kreissegmentfläche angesetzt ist, so daß der Mittelstreifen die Randstreifen (112) jeweils dreiseitig umfaßt, wobei der Durchmesser dieser Detektoranordnung derart gewählt ist, daß die Gesamtfläche des Mittelstreifens (111) der Summe der Flächen der Randstreifen (112) entspricht.

4. Detektoranordnung nach Anspruch 3, **dadurch gekennzeichnet**, daß eine weitere, den Mittelstreifen (111) und die Randstreifen (112) konzentrisch umfassende Ringfläche (113) vorgesehen ist, deren von Null abweichendes Ausgangssignal eine vollständige Außer-Fokus-Lage der Abbildungsoptik (5) kennzeichnet.

5. Detektoranordnung nach einem der Ansprüche 1 bis 4, **dadurch gekennzeichnet**, daß im Strahlengang des reflektierten Lichtbündels ein optisches Abbildungssystem zum Abbilden des reflektierten Lichtbündels auf der Detektoranordnung (11) angeordnet ist, das eine Zylinderlinse (10) aufweist, die derart angeordnet ist, daß sie das Lichtbündel auf der Detektoranordnung in eine zu den Längsachsen (L) der Detektorflächen (111, 112) senkrecht stehende Abbildung umformt.

FIG 1

FIG 5

FIG 2

0 261 545

FIG 3

FIG 4

FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 10, Nr. 80 (P-441)[2137], 29. März 1986; & JP-A-60 217 535 (SONY K.K.) 31-10-1985 * Insgesamt * --- | 1 | G 11 B 7/09 G 11 B 11/10 |
| A | PATENT ABSTRACTS OF JAPAN, Band 7, Nr. 134 (P-203)[1279], 11. Juni 1983; & JP-A-58 50 630 (YOSHITAKA KATAYAMA) 25-03-1983 * Insgesamt * --- | 1 | |
| A | PATENT ABSTRACTS OF JAPAN, Band 9, Nr. 116 (P-357)[1839], 21. Mai 1985; & JP-A-60 01 632 (MITSUBISHI DENKI K.K.) 07-01-1985 * Insgesamt * --- | 1 | |
| A | PATENT ABSTRACTS OF JAPAN, Band 9, Nr. 170 (P-373)[1893], 16. Juli 1985; & JP-A-60 45 947 (MITSUBISHI DENKI K.K.) 12-03-1985 * Insgesamt * --- | 1 | RECHERCHIERTE SACHGEBIETE (Int. Cl.4) |
| A | EP-A-0 070 552 (TOSHIBA) * Seite 9, Zeile 11 - Seite 11, Zeile 24; Figuren 1,2 * --- | 1,2,5 | G 11 B |
| A | EP-A-0 137 272 (MITSUBISHI) * Seite 2, Zeile 5 - Seite 3, Zeile 6; Seite 11, Zeile 2 - Seite 13, Zeile 13; Figur 5 * --- | 1,3,5 | |
| A | DE-A-3 604 722 (HITACHI) * Seite 23, Absatz 2 - Seite 25, Absatz 1; Seite 27, Absatz 2; Figuren 15,16,19 * ------ | 1 | |

Der vorliegende Recherchenbericht wurde für alle Patentansprüche erstellt

| Recherchenort | Abschlußdatum der Recherche | Prüfer |
|---|---|---|
| DEN HAAG | 16-12-1987 | LEHNBERG C.R. |